# EUROPÄISCHE PATENTSCHRIFT

(11) **EP 2 709 042 B1**
(45) Veröffentlichungstag und Bekanntmachung des Hinweises auf die Patenterteilung: **02.11.2016**
(21) Anmeldenummer: 12006509.9
(22) Anmeldetag: 17.09.2012
(51) Int. Cl.: G06K 19/077, G09F 3/04, G09F 3/02

(54) **Mehrlagiges RFID Schlaufenetikett mit Kaltsiegelklebeschichten**
Multilayer RFID loop tag comprising cold seal adhesive layers
Etiquette RFID multicouche à boucle avec des couches adhésives de scellage à froid

(43) Veröffentlichungstag der Anmeldung: 19.03.2014
(73) Patentinhaber: Sihl GmbH, 52355 Düren (DE)
(72) Erfinder: Buchbinder, Elisabeth, 52385 Nideggen (DE); Niemöller, Axel, 52355 Düren Niederau (DE)
(74) Vertreter: f & e patent

(56) Entgegenhaltungen:
- EP-A1- 2 431 962
- FR-A1- 2 760 209
- US-A1- 2007 146 464

## Beschreibung

Die vorliegende Erfindung betrifft einen mehrlagigen Gegenstand, umfassend ein erstes Substrat mit einer ersten Trägerschicht und mindestens ein weiteres (zweites) Substrat mit einer zweiten Trägerschicht, welche auf jeweils einer Seite zumindest teilweise mit einer Kaltsiegelklebeschicht versehen und eben durch den Kontakt ihrer jeweiligen Kaltsiegelklebeschicht miteinander verbunden sind, ein Verfahren zur Herstellung eines solchen Gegenstandes sowie die Verwendung eines Druckers mit mindestens zwei Abwinklungen und mindestens einer Schneidvorrichtung zur Herstellung derartiger Gegenstände. Insbesondere betrifft die vorliegende Erfindung auch die kostenoptimierte Herstellung eines Gepäckstreifenanhängers mit sogenanntem RFID-Transponder (Radio-Frequency-Identification/ Identifizierung mit Hilfe elektromagnetischer Wellen), insbesondere für die Selbstabferügung durch den Endverbraucher auf Abruf (sogenannter "On Demand"-Druck beim "Self-Check-In").

Zur Speicherung und Wiedergabe von Informationen werden in vielen Bereichen der Technik Etiketten verwendet, die auf oder an einem zu kennzeichnenden Objekt angebracht werden könnten, Im einfachsten Fall besteht ein Etikett aus einem Trägersubstrat auf bzw. in welchem die zu speichernde bzw. wiederzugebende Information festgehalten wird, beispielsweise einem beschreibbaren Stück Papier und einer Vorrichtung zum Anbringen des Etiketts auf oder an der Ware, beispielsweise einer selbstklebenden Beschichtung auf der Unterseite des Trägersubstrats, d.h. der der informationstragenden Seite gegenüberliegenden Seite, oder einer Schlaufe, mit deren Hilfe das Etikett an dem zu kennzeichnenden Objekt befestigt werden kann. Um eine automatische, d.h. maschinelle Datenerfassung und Identifikation zu ermöglichen, können auf die Etikettenoberseite/-vorderseite beispielsweise sogenannte "Barcodes" aufgedruckt sein. Eine berührungslose Datenerfassung selbst durch Materie hindurch ermöglichen sogenannte RFID-Systeme, bei denen ein aktiver oder passiver Transponder, umfassend mindestens einen Chip und mindestens eine Antenne, im elektromagnetischen Feld eines Lesegeräts Daten ausgeben und gegebenenfalls sogar aufnehmen kann. Etiketten mit einem RFID-Transponder werden umgangssprachlich zum Teil auch als "Funketiketten" bezeichnet.

Da in der Praxis das mit einem Etikett versehene Objekt vielfach an mehreren Stationen bearbeitet wird, wobei häufig sowohl eine manuelle als auch eine automatische Informationsverarbeitung stattfindet, letztere teilweise sogar mit unterschiedlichen Systemen an den unterschiedlichen Stationen, besteht ein Bedarf dafür, unterschiedliche Arten der Datenspeicherung und -wiedergabe in Etiketten kombinieren zu können, welche sich darüber hinaus vorzugsweise kostengünstig und umweltfreundlich herstellen lassen sollten.

Dies wird nachfolgend vorrangig am Beispiel von Gepäckstreifenanhängern beschrieben, insbesondere solchen zur Kennzeichnung von Gepäckstückes im Flugverkehr (im Folgenden auch als Flugg0päckBnl1änger bezeichnet); die vorliegende Erfindung ist jedoch nicht auf diese Anwendung beschränkt. So können die Gegenstände der vorliegenden Erfindung beispielweise auch als Schlaufenanhänger (Loop Tag) zur Kennzeichnung von Gegenständen, die keine Gepäckstück darstellen, verwendet wurden, beispielsweise im Bereich dor Warenlogistik.

Üblicherweise stellen Fluggepäckanhänger mehrlagige längliche Streifen aus flexiblen Materialien dar, die jedenfalls auf ihrer einen Seite aufgedruckte Informationen aufweisen. Diese Anhänger werden üblicherweise um einen Griff, Henkel oder ähnliches des zu kennzeichnenden Gepäckstückes herumgeschlungen, woraufhin dann die beiden Enden des Anhängers auf ihrer nicht bedruckten Seite aneinander mit einem klebemittel befestigt werden. Ferner weisen Fluggepäckanhänger im Allgemeinen noch von dem Anhänger ablösbare Kontrollabschnitte auf, beispielsweise sogenannte "Additional Stubs" oder "Claim Tags".

Auf der dem Betrachter zugewandten Seite sind für den Transport des Gepäckstückes relevante Informationen aufgedruckt, die die Zuordnung und Sortierung des Gepäcks anhang seines Besfimmungsories in der maschinellen Verarbeitung ermöglichen, vornehmlich in Form eines Barcodes. Es hat sich jedoch gezeigt, dass insbesondere bei Transferilügen, also Flügen mit einem Zwischenstopp, bei welchem das Gepäck von einem Flugzeug in ein anderes verladen werden muss, durch das Verladen der Koffer der Gepäckanhänger in vielen Fällen geknittert wird, was die Lesbarkeit des aufgedruckte Barcodes beeinträchtigt. Da andererseits der Barcode im Transferflughafen üblicherweise ein zweites Mal gelesen werden muss, um die korrekte Zuordnung des Gepäckstückes in der Kürze der Zeit sicherzustellen, kommt es gerade bei Transferflügen zu einer vergleichsweise hohen Anzahl von Gepäckstücken, welche nicht korrekt oder jedenfalls nicht rechtzeitig ihrem Bestimmungsort zugeordnet werden können.

RFID-Etiketten, wie sie beispielsweise in EP 1 035 504 A1 beschrieben sind, sind hingegen wesentlich unempfindlicher gegen widrige Umgebungsbedingungen wie Schmutz, Feuchte und Nässe und erfordern weiterhin keine freie Sicht auf den Daten- bzw. Codeträger; vielmehr können ihre Signale sogar diverse Materialien - mit Ausnahme von Metall - durchdringen. Auch durch die Beanspruchung der Fluggepäckanhänger beim manuellen Verladen der Gepäckstücke wird die Lesbarkeit eines RFID-Transponders in geringerem Umfang beeinträchtigt.

Heutzutage erfolgt die Inkorporation von RFID-Tags bei der Herstellung der Fluggepäckanhänger in einem zusätzlichen separaten Arbeitsgang, d.h. nicht "On Demand" am Flughafen, üblicherweise mit Hilfe von Aufspendemaschinen für selbstklebende Inlays und Etiketten. Eine Rolle des bereits bedruckten oder unbedruckten Etikettenträgermaterials, welches auf einer Seite mit einer selbstklebenden Beschichtung versehen ist, die von einem Silikonträgermaterial abgedickt wird und eine Rolle der bereits angestanzten Inlays, die auf einer Seite ebenfalls mit einer selbstklebenden Beschichtung versehen sind, die ihrerseits ebenfalls mit einem Silikonträgermeterial abgedeckt ist, werden in einer Aufspertdemaschine dergestalt verbunden, dass die Inlays von ihrem Silikonträgermaterial abgeschält werden und mit ihrer haftenden Seite auf die Rückseite des Etiketts aufgebracht werden. Ein Verfahren zur Aufbringung von RFID-Tags auf Etiketten, bei welchem nur die Rückseite des Etiketts oder des RFID-Tags mit Klebstoff beschichtet und so die erforderliche Menge an Trägermaterial verringert werden kann, ist in FR 2 760 209 A1 beschrieben.

Fluggepäckanhänger mit einem integrierten RFID-Transponder neben einem Barcodeaufdruck auf der Vorder-/Oberseite sind beispielsweise in EP 0 595 549 A2 und US 2007/0146464 A1 beschrieben. Da die Inkorporation eines RFID-Transponders in einen Gepäckanhänger jedoch zusätzliche Kosten verursacht und für Direktflüge die Leserate handelsüblicher Fluggepäckanhänger mit einem Barcodeaufdruck ohne RFID-Tag oftmals ausreichend ist, besteht ein Bedarf an einem geeigneten Produktaufbau und einem Verfahren zur Herstellung desselben, bei welchem -je nach Anforderung - ein "Standard"-Fluggepäckanhänger ohne integrierten RFID-Transponder oder ein Fluggepäckanhänger mit integriertem RFID-Transponder bereitgestellt werden kann, wobei dies möglichst kostengünstig und umweltschonend, d.h. unter Vermeidung von unnötigen Abfallprodukten im Herstellungsprozess erfolgen sollte.

Überraschenderweise wird diese Aufgabe gelöst durch den mehrlagigen Gegenstand der vorliegenden Erfindung sowie das Verfahren zu seiner Herstellung, wie insbesondere in den Ansprüchen beschrieben. Durch Verwendung von Kaltsiegelkleber anstelle des üblicherweise verwendeten Haftklebers sowohl für die Beschichtung der Unterseite des ersten Substrats (beispielsweise des Etiketts) als auch des zweiten Substrats (beispielsweise eines RFID-Transponders auf einem Trägermaterial/einem RFID-Inlay/RFID-Tag) kann auf die zur Abdeckung von selbstklebenden Schichten (auch als haftklebende Schichten bezeichnet) üblichen, mit Trennmittel beschichteten Schutzpapiere, wie beispielsweise Silikonpapiere, verzichtet werden. Dies ist ökonomisch wie ökologisch vorteilhaft. Derartige Etiketten können nach dem Verfahren der vorliegenden Erfindung auch in sogenannten "On Demand"-Druckern für die Selbstabfertigung (Self-Chock-in) von Fluggästen hergestellt werden, wobei nur bei Bedarf, beispielsweise im Falle eines Transferfluges, ein mit einem RFID-Transponder versehenes Etikett bereitgestellt wird, während ansonsten ein herkömmliche Etikett ohne RFID-Transponder ausgegeben wird.

Ein solcher Drucker benötigt lediglich zwei Abwinklungen, jeweils eine für das erste Substrat (beispielsweise Etikettenmaterial) und das zweiten Substrat (beilspielsweise RFID-Transponder-Inlay), jedoch weder Vorrichtungen zum Ablösen eines ersten oder zweiten Substrats von einem Schutzpapier noch Aufwicklungen zur Aufnahme des Schutzpapiers. Auch die zur Bereitstellung der entsprechenden Etiketten verwendeten Drucker sind daher kostengünstiger in der Herstellung und Anschaffung und können mit weniger Wartungsbedarf betrieben werden.

Durch Verwendung einer Kaltsiegelklebeschicht, die nur an einer gleichartigen Beschichtung (quasi nur "an sich selbst") haftet, werden ferner bei Schlaufenetikettenanwendungen auch jedwede Art von Kleberrückständen an den zu transportierenden Gepäckstücken vermieden. Ferner sind mit dieser Art von Kleber beschichtete Substrate ohne Weiteres beispielsweise auch im Thermo-, Thenrofiransfer-, Tintenstrahl- und Matrixdruckverfahren bedruckbar.

Die vorliegende Erfindung betrifft daher einen mehrlagigen Gegenstand, umfassend ein erstes Substrat mit einer ersten Trägerschicht und mindestens ein weiteres (zweites) Substrat mit einer zweiten Trägerschicht, welche auf jeweils einer Seite zumindest teilweise mit einer Kaltsiegelklebeschicht versehen sind und eben durch den Kontakt ihrer jeweiligen Kaltsiegelklebeschicht miteinander verbunden sind, wobei das erste Substrat eine größere Fläche aufweist als das mindestens eine weitere Substrat und das mindestens eine weitere Substrat lediglich teilweise die Kaltsiegelklebeschicht des ersten Substrats bedeckt, wobei die Klebkraft zwischen den beiden Kaltsiegelklebeschichten 3 N/25 mm bis 30 N/25 mm beträgt.

Ein Substrat umfasst im Sinne der vorliegenden Erfindung einen mehrschichtigen Aufbau (Laminat), welcher mindestens eine Trägerschicht umfasst und an einer äußeren Oberfläche zumindest teilweise mit einer Kaltsiegelklebeschicht versehen ist, während seine andere, dieser Oberfläche gegenüberliegende Oberfläche bevorzugt keine Kaltsiegelklebeschicht aufweist.

Als Trägerschicht wird im Sinne der vorliegenden Erfindung eine Schicht bezeichnet, die dem mehrlagigen Gegenstand mechanische Stabilität und/oder Reißfestigkeit verleiht, beispielsweise eine Schicht aus Papier, Karton oder geeigneten Polymerfolien.

Mehrlagig bedeutet im Sinne der vorliegenden Erfindung, dass der Gegenstand mindestens die beiden vorgenannte Substrate aufweist, wobei diese ihrerseits unabhängig voneinander ebenfalls jeweils ein mehrlagiges Laminat umfassen können. So können die erste und/oder die zweite Trägerschicht beispielsweise den folgenden, in WO 00/55832 A1 näher beschriebenen Produktaufbau aufweisen:
1. Tennmittelhaltige Schicht (sogenannte "Release"-Schicht)
2. Thermosensitive Beschichtung
3. Papier
4. Kaschierkleber
5. Biaxial gereckte Folie
6. Kaschierkleber
7. Papier
8. Kaitsiegelkleber
oder auch den in EP 2 061 018 A1 und EP 3 431 962 A1 näher beschriebenen Produktaufbau:
1. Trennmittelhaltige Schicht (sogenannte "Release"-Schicht)
2. Thermosensitive Beschichtung
3. Papier
4. Haftkleber
5. Trennmittelhaltige Schicht (sogenannte "Release"-Schicht, bevorzugt basierend auf Silikonen)
6. Biaxial gereckte Folie
7. Kaltsiegelkleber.

Auf diese Weise können beispielsweise Fluggepäckanhänger mit einem sogenannten "Piggyback" ("Huckepack")-Produktaufbau hergestellt werden, die mehr als eine funktionale Schicht im Verbundaufbau vereinen, beispielsweise eine selbstklebende und eine Kaltsiegelkleberschicht. Bei der Verwendung als Fluggepäckanhänger können beispielsweise aus der selbstklebenden Schicht die für viele Fluggesellschaften erforderlichen Kontrollabschnitte (sogenannte "Additional Stubs") ausgestanzt werden und an den dafür vorgesehenen Kontrollbögen befestigt werden, während mithilfe der Kaltsiegelkleboschicht die Verklebung um einen Koffergriff realisiert werden kann, ohne dass ein Silikonpapier abgezogen werden müssto.

Einseitig mit Kaltsiegelkleber beschichtete Substrate sind somit grundsätzlich bereits aus dem Stand der Technik bekannt, ebenso wie das Verkleben zweier Enden eines mit einem Kaltsiegelkleber beschichteten Substrats.

Die vorliegende Erfindung stellt jedoch erstmals einen Gegenstand sowie ein Verfahren bereit, in welchen ein erstes Substrat, welches eine bestimmte Fläche aufweist, mit einem oder mehreren weiteren Substraten geringerer Größe über Kaltsiegelklebeschichten verbunden wird, wobei das oder die weitere(n) Substrat(e) lediglich teilweise die Kaltsiegelklebeschicht(en) des ersten Substrats bedecken. Dies ist insbesondere für die sogenannte "Inlay-Einspendung" vorteilhaft.

Der Produktaufbau des ersten und des mindestens einen weiteren Substrats kann gleich oder verschieden sein, bevorzugt umfasst das zweite Substrat jedoch mindestens einen Chip zur Speicherung von Daten und eine Antenne, bevorzugt eine RFID-Vorrichtung. Bevorzugt umfasst das erste Substrat keinen solchen Chip und keine Antenne.

Besonders bevorzugt umfasst das zweite Substrat einen RFID-Transponder als RFID-Vorrichtung, enthaltend einen Chip und mindestens eine Antenne auf einem Träger. Geeignete RFID-Transponder sind beispielsweise in EP 1 035 503 A1 und EP 1 035 504 A1 beschrieben. Grundsätzlich können hierbei aktive oder passive RFID-Transponder verwendet werden, bevorzugt sind jedoch passive RFID-Transponder, die durch die vom Lesegerät erzeugten magnetischen Wechselfelder bzw. hochfrequenten Radiowellen mit Energie versorgt werden und selbst keine Energieversorgung in Form einer Batterie oder ähnlichem benötigen. Die RFID-Transponder können eine Betriebsfrequenz im sogenannten Low-Frequency-Bereich (< 135 kHz, beispielsweise 128 KHz), High-Frequency-Bereich (13,56 MHz), Ultra-High-Frequency-Bereich (860-930 MHz, beispielsweise 868 - 915 MHz) sowie im Mikrowellenbereich (2,45 GHz) aufweisen.

Die Trägerschicht des ersten und/oder des mindestens einen weiteren Substrats (nachfolgend auch als erste und/oder zweite Trägerschicht bezeichnet, obwohl jedes der Substrate mehr als eine, voneinander verschiedene Trägerschichten umfassen kann) ist bevorzugt ausgewählt aus der Gruppe enthaltend Papier, Karton, Polymerfolien, letztere bevorzugt ausgewählt aus der Gruppe enthaltend, Celluloseacetat (CA), Polyamid (PA), Polycarbonat (PC), Polyethylen (PE), Polyethylennaphthalat (PEN), Polyethylenterephthalat (PET), Polyimid (PI), Polymilchsäure (PLA), Polypropylen (PP), Polystyrol (PS) und Polyvinylchlorid (PVC), metallisierte Folien, Metallfolien und Vliese oder (mehrlagige) Laminate umfassend dieselben, wobei die einzelnen Lagen dieser Laminate jeweils aus den gleichen oder verschiedenen Materialien bestehen können und optional mit natürlichen oder künstlichen Faserstoffen verstärkt sein können. Sofern Folien als Trägerschicht bzw. Bestandteil einer Trägerschicht verwendet werden, können diese unabhängig voneinander ungereckt, monoaxial oder biaxial gereckte sein. Besonders bevorzugt sind biaxial gereckte Folien, da sie auch nach Kaschierung im Verbund über eine gute Einreißfestigkeit verfügen. Kommerziell erhältliche Beispiele sind beispielsweise die biaxial orientierten Polyesterfilme Mylar und Melinex, erhältlich von DuPont/Teijin Films (Luxemburg).

Der oder die Trägerschichten werden im Allgemeinen so gewählt, dass vorzugsweise jedes der Substrate, jedenfalls aber der durch Verbindung eines ersten Substrats mit mindestens einem weiteren Substrat gebildete mehrlagige Gegenstand eine hohe mechanische Belastbarkeit, insbesondere eine hohe Bruchlast aufweisen. Die Bruchlast bei einer Breite von 15 mm eines jeden Substrats in dem mehrlagigen Gegenstand gemäß ISO 1924-1:1992(E) nach 24stündiger Konditionierung der Substrate bei 23 °C und 50 % relativer Luftfeuchtigkeit beträgt vorzugsweise etwa 40 bis 3.000 N/15 mm, weiterhin bevorzugt 100 bis 2.500 N/15 mm² und besonders bevorzugt 120 bis 500 N/15 mm, sowohl in Maschinenlaufrichtung (MD) als auch quer dazu (CD), wobei bei einem mehrlagigen Gegenstand im Sinne der vorliegenden Erfindung die Orientierung in den einzelnen Lagen bevorzugt übereinstimmt. Die Länge der zur Messung verwendeten Teststreifen beträgt hierbei 250 mm. Sofern biaxial orientierte Polymerfilme verwendet werden, kann eine hohe (anfängliche) Einreißfestigkeit erzielt werden, wohingegen die Weiterreißfestigkeit zum Teil gering sein kann. Mit monoaxial orientierten Polymerfilmen wird eine hohe Einreißfestigkeit im Allgemeinen nur quer zu besagter Orientierung erhalten. Mit nicht orientierten Polymerfilmen können im Allgemeinen sowohl eine gute (anfängliche) Einreißfestigkeit als auch eine gute Weiterreißfestigkeit erhalten werden. Die Einreißfestigkeit eines jeden Substrats in Querrichtung (CD) gemäß ASTM D-1004-07 liegt bevorzugt über 25 N, besonders bevorzugt über 30 N und beträgt bevorzugt maximal 100 N, gemessen mit einer Zugprüfungsmaschine der Firma Ametek (Merbusch, Deutschland) Typ M5K bei einer Probendicke von 100 - 300 µm, insbesondere von 200 µm.

Die Trägerschichten haben bevorzugt eine Dicke im Bereich von 3 bis 250 µm, vorzugsweise 9 bis 100 µm und insbesondere 12 bis 80 mm. Falls die Trägerschicht Papier oder Karton umfasst, beträgt ihr Flächengewicht bevorzugt 30 bis 250 g/m², weiterhin bevorzugt 40 bis 200 g/m² und insbesondere 50 bis 150 g/m².

Kaltsiegelkleber (im Englischen auch als "Cold Seal oder Cohesive Seal" berechnet) sind spezielle Arien von Klebstoffen, welche bei Raumtemperatur allein durch Druck ohne Aktivierungsmittel wie Wärme, Wasser oder sonstige Lösungsmittel gegenüber sich selbst, d.h. gegenüber Kaltsiegelklebstoffen, eine nennenswerte Haftung aufweisen, während sie gegenüber anderen Substraten im Wesentlichen keine haftenden Eigenschaften aufweisen. Die Anfangshaftung ("loop-tack") gegenüber einer Kristallspiegelglasplatte gemäß FTM-9 eines handelsüblich satinierten Papiers mit einem Flächengewicht von 80 g/m², das mit 7 g/m² eines Kaltsiegelklebers im Sinne der vorliegenden Erfindung beschichtet, für 4 Minuten bei 60 °C getrocknet und vor der Messung für 24 Stunden bei 23 °C und 50 % relativer Luftfeuchtigkeit konditioniert wurde, beträgt bevorzugt weniger als 0,3 N. Somit müssen Kaltsiegelklebeschichten nicht mit einem Schutzpapier abgedeckt werden, um ein ungewolltes Verkleben mit anderen Substraten zu verhindern, was Kosten und Resourcen spart und in vielen Fällen auch die manuelle wie maschinelle Handhabung vereinfacht. Geeignete Kaltsiegelkleber sind dem Fachmann bekannt. Bevorzugt umfassen die Kaltsiegelklebeschichten unabhängig voneinander jeweils mindestens einen Kaltsiegelklebstoff, ausgewählt aus der Gruppe, enthaltend natürlich vorkommenden oder synthetischen Latex, natürlich vorkommenden oder synthetischen Kautschuk, (Meth-)Acrylatcopolymere und Mischungen derselben. Ein Hersteller von geeigneten Kaltsiegelklebstoffen ist beispielsweise die Firma Henkel mit Sitz in Düsseldorf (Handelsname Latiseal).

Bevorzugt werden zur Herstellung von Kaltsiegelklebeschichten Mischungen natürlich vorkommender oder synthetischer Latexdispersionen und/oder wässrige Polyacrylsäuredispersionen, Polyacrylatdispersionen, Poly(meth)acrylatdispersionen und/oder Acrylat-(Meth)acrylat-Copolymerdispersionen oder Mischungen dieser (Meth)acrylatdispersionen auf eine Seite der jeweiligen Trägerschicht aufgetragen, welche zur Verbesserung der Haftung der Kaltsiegelklebeschicht optional zuvor behandelt worden sein können und anschließend getrocknet.

Ein typisches Beispiel einer Kaltsiegelklebeschichtzusammensetzung enthält 40 bis 65 Gew.-%, vorzugsweise 50 bis 60 Gew.-% einer natürlichen Latexdispersion, vorzugsweise durch Zusatz von Ammoniak auf einen pH-Wert von etwa 10 eingestellt, 20 bis 50 Gew.-%, vorzugsweise 30 bis 40 Gew.-% einer Styrol-Acrylat-Emulsion oder-Dispersion und einen geringen Anteil, üblicherweise 1 bis 5 Gew.-% Gesamtanteil, bezogen auf die Zusammensetzung, an Komponenten, ausgewählt aus Benetzungsmitteln, Latexstabilisatoren, Antioxidantien, Bioziden, Verdickern und/oder Stoffen zur Erhöhung der Klebrigkeit (sogenannte "Tackifier").

Geeignete Beispiele für Kaltsiegelkleber auf Basis natürlich vorkommender Latexdispersionen und wässriger Polyacrylatdispersionen sind beispielsweise in US-A 5,070,164, US-A 4,898,787 und US-A 4,888,395 beschrieben.

Die Kaltsiegelklebeschicht wird üblicherweise mit einem Flächengewicht im Bereich von etwa 2 bis 25 g/m², vorzugsweise von etwa 4 bis 15 g/m² aufgetragen, bezogen auf die Trockenmasse.

Die Klebkraft (Schälwiderstand 180° bei Raumtemperatur / 23 °C) in Anlehnung an FTM-1 der FINAT (Federation Internationale des Fabricants et Transformateurs dé Adhesives et Thermocollants sur Papiers et autre supports), gemessen 3 Minuten nach dem In-Kontakt-Bringen zweier mit dem Kaltsiegelkleber beschichteten Oberflächen miteinander, beträgt üblicherweise mindestens 3 N/25 mm, vorzugsweise mindestens 5 N/25 mm und höchstens 30 N/25 mm. Da hier die Klebkraft zweier mit Kaltsiegelkieber beschichteter Substrate gegeneinander gemessen wird, wird eines der Substrate bspw. mit doppelseitigem Klebeband so auf einer V2A-Stahlplatte fixiert, dass die mit Kaltsiegelkleber beschichtete Seite frei über der Stahlplatte liegt und dann mit dem zweiten Substrat verklebt werden kann. Im Übrigen wird die FTM-1 befolgt.

Vorzugsweise ist die Klebekraft zwischen den Kaltsiegelklebeschichten so hoch, dass bei zu starker Belastung das Trägersubstrat reißt, jedoch kein adhäsiver oder kohäsiver Bruch der Klebeschicht auftritt, insbesondere wenn eine Trägerschicht aus Papier verwendet wird.

Die Kaltsiegelklebeschichten können die betreffende Oberfläche der jeweiligen Trägerschicht ganz oder teilweise bedecken. Eine nur teilweise Bedeckung kann insbesondere aus Kostengründen vorteilhaft sein. So kann die Kaltsiegelklebeschicht beispielsweise in Streifen, vorzugsweise in Längsrichtung, d.h. der Richtung größerer longitudinaler Ausdehnung der jeweiligen Substrate, aufgetragen werden. Denkbar sind jedoch auch andere Auftragungsmuster. Da die Kaltsiegelklebeschicht in der endgültigen Anwendung nur in denjenigen Bereichen benötigt wird, weiche mit einer anderen Kaltsiegelklebeschicht kontaktiert werden sollen, müssen auch nur diese Bereiche mit einer solchen Kaltsiegelklebeschicht beschichtet werden. Insbesondere in der besonders bevorzugten Ausführungsform der Erfindung, in welcher das erste Substrat einen Fluggepäckanhänger darstellt, welcher mit einem zweiten Substrat, umfassend einen Chip, bevorzugt einen RFID-Transponder, verbunden ist, kann das erste Substrat vorteilhaftorweise nur in denjenigen Bereichen der einen Seite seiner Trägerschicht mit Kaltsiegelkleber beschichtet werden, welche in der Anwendung als Fluggepäckanhänger an einem Gepäckstück zum Verkleben der beiden Enden des Gepäckanhängers benötigt werden, sowie (gegebenenfalls zusätzlich) dem Bereich, in welchem dieses erste Substrat mit dem zweiten Substrat verbunden wird.

Verfahren zum Aufbringen der Kaltsiegelklebeschichten auf die Trägerschichten sind dem Fachmann bekannt und umfassen übliche Beschichtungstechniken, wie Walzlackieren, Rollrakelstreichen, Düsenauftrag oder Tiefdruck. Insbesondere für eine lediglich teilweise Beschichtung einer Trägerschicht mit einer Kaltsiegelklebeschicht ist der Auftrag mittels Düsen- oder Tiefdrucktechnik bevorzugt.

Mindestens eine Seite des einen oder beider Substrate umfasst zumindest teilweise eine beschreib- und/oder bedruckbare Oberfläche, bevorzugt eine Oberfläche, bedruckbar mittels eines Verfahrens, ausgewählt aus der Gruppe, enthaltend Thermodruck, insbesondere Thermodirektdruck und Thermotransferdruck, Tintenstrahldruck, Transferdruck, Laserdruck, Offsetdruck, Flexodruck, Tiefdruck und Siebdruck.

Bevorzugt ist die der Kaltsiegelklebeschicht gegenüberliegende äußere Oberfläche des ersten Substrats beschreib- und/oder bedruckbar. Da diese Seite in der endgültigen Anwendung der besonders bevorzugten Ausführungsform der Erfindung, eines um den Griff, Henkel oder ähnliches eines Gepäckstückes in Schlaufenform angebrachten Fluggepäckanhängers, die dem Betrachter zugewandte Seite ist, wird sie im Folgenden auch als Oberseite des mehrlagigen Gegenstandes bezeichnet. Diese Oberseite kann entweder eine Trägerschicht darstellen, die ohne weitere zusätzliche bedruckbare Schichten bedruckbar ist, wie beispielsweise eine Trägerschicht aus Papier, Papierlaminaten, Karton, bedruckbaren Polymerfilmen oder Vliesen wie beispielsweise das kommerziell erhältliche Produkt Tyvek von DuPont (Luxemburg). Alternativ oder zusätzlich können auch eine oder mehrere bedruckbare Schichten auf die erste Trägerschicht aufgebracht sein, wie beispielsweise wärmeempfindliche Schichten für den Thermodruck, tinteaufnehmende Schichten, wärmeaufnehmende Schichten für den Thermotransferdruck, laserbedruckbare Schichten, mittels Offsot-Verfahren bedruckbar Schichten und im Flexodruck bedruckbare Schichten.

Geeignete Beschichtungszusammensetzungen sowie Verfahren zu ihrer Aufbringung auf Trägerschichten sind dem Fachmann bekannt. Besonders bevorzugt sind im Thermodruck und Thermotransferdruck bdruckbare Schichten, die zusätzliche zu der wärmeempfindlichen Schicht weitere Schichten über dieser Schicht enthalten können. Beispielsweise kann über der wärmeempfindlichen Schicht noch eine darüberliegende Schicht mit trennenden Eigenschaften (sogenannte "Release-Schicht") verwendet werden, die im Folgenden näher beschrieben werden wird. Für den Thermodruck geeigneten Papiere und Beschichtungen sind beispielsweise in US 5,811,368 und den dort zitierten Dokumenten beschrieben.

Insbesondere wenn das zweite Substrat einen RFID-Transponder umfasst, der an einem Fluggepäckanhänger angebracht wird, kann auf eine bedruckbare Schicht in dem zweiten Substrat verzichtet werden.

Mindestens eines der Substrate der vorliegenden Erfindung, bevorzugt das erste Substrat, kann auch ein mehrlagiges Laminat umfassen, welches eine trennmittelhaltige Schicht umfasst ("Release-Schicht"). Dies kann zum einen die äußerste Schicht auf der der Kaltsiegelklebeschicht gegenüberliegenden Oberfläche des ersten Substrats sein (der Vorderseite in der bevorzugten Ausführungsform des Fluggepäckanhängers mit RFID-Transponder) - wie bereits zuvor beschrieben - aber auch eine Schicht innerhalb des Substrats, so dass die trennmittelhaltige Schicht sich nicht an der Oberfläche des Substrats befindet, sondern in seinem Inneren und sich ober- und unterhalb dieser Schicht noch weitere Schichten befinden. Das Substrat kann auch mehrere solche trennmittelhaltige Schichten umfassen, beispielsweise sowohl eine trennmittelhaltige Schicht an der Oberfläche als auch mindestens eine im Inneren des Substrats.

Sofern eines der Substrate eine trennmittelhaltige Schicht im Inneren des Substrats umfasst, d.h. eine Schicht in einem mehrlagigen Laminat, welche nicht an einer der beiden Oberflächen dieses Laminats liegt, ist diese trennmittelhaltige Schicht bevorzugt in Kontakt mit einer selbstklebenden Schicht. Auf diese Weise kann ein sogenannter "Piggyback"-Aufbau realisiert werden, der bereits zuvor beschrieben wurde. Mit einem solchen Aufbau ist es möglich, durch selektives Ausstanzen selbstklebende Etiketten zu erzeugen, die von dem mehrlagigen Gegenstand abgezogen werden können und auf beliebige Substrate aufgeklebt werden können. Auf diese Weise können beispielsweise die von vielen Fluggesellschaften benötigten "Additional Stubs" erzeugt werden. Für weitere Details sei auf EP 2 061 018 A1 verwiesen.

Die Aufbringung einer trennmittelhaltigen Schicht auf die Oberfläche der Vorderseite des ersten Substrats kann die Haftwirkung der auf die Rückseite des Substrats aufgebrachten Kaltsiegelklebeschicht an dieser Vorderseite verringern, insbesondere wenn das erste Substrats oder auch der mehrlagige Gegenstand der vorliegenden Erfindung, welche unter Verwendung eines solchen ersten Substrats gebildet wurde, in Rollenform aufgewickelt vorliegt und verringert somit die Kraft, die beim Abrollen des Materials aufgewendet werden muss.

Diese optionale trennmittelhaltige Schicht kann beispielsweise hergestellt werden durch Auftrag einer Zusammensetzung, umfassend ein organisches Trennmittel, ausgewählt aus der Gruppe, enthaltend Polyamide, Amidwachse, Montanwachse, Polyolefinwachse, Esterwachse, Calciumstearat, Zinkstearat, Polyvinylester, Polyacrylat-Copolymere, Fettsäureester, Polysaccharide, Polysiloxane, langkettige Alkylprodukte, worunter im Sinne der vorliegenden Erfindung monomere oder insbesondere polymere Verbindungen verstanden werden, die einen oder mehrere Alkylreste mit einer Kettenlänge von ≥ 12 Kohlenstoffatomen, bevorzugt von 13 bis 30 Kohlenstoffatomen aufweisen, beispielsweise Poly(meth)acrylate mit Alkylseitenketten mit 16 bis 20 Kohlenstoffatomen und Mischungen derselben.

Die Kraft zur Ablösung einer Kaltsiegelklebeschicht auf der Rückseite/Unterseite eines Substrats bzw. mehrlagigen Gegenstandes von der Oberfläche auf der entgegengesetzten Seite/Vorderseite dieses Substrats bzw. mehrlagigen Gegenstandes, gemessen gemäß FTM-3, wobei die nicht dem Kaltsiegelkleber beschichtete Seite eines Substrats von der mit dem Kaltsiegelkleber beschichteten Seite eines gleichen Substrats abgezogen wird, beträgt vorzugsweise höchstens 300 cN/50 mm, weiterhin bevorzugt höchstens 200 cN/50 mm und besonders bevorzugt 100 cN/50 mm. Bevorzugt ist diese Kraft, die das Abwickelverhalten des Materials von einer Rolle bei der Verarbeitung/ dem Druck des Etiketts kennzeichnet, so gering wie möglich, liegt aber üblicherweise über 30 cN/50 mm.

Die optional vorhandene selbstklebende Schicht im Inneren eines mehrlagigen Laminats, d.h. im Inneren eines Substrats, kann als permanente oder wiederablösbare selbstklebende Schicht ausgebildet sein. Permanente Haftkleber im Sinne der vorliegenden Erfindung haben in der Regel eine Klebkraft, gemessen nach FTM1 nach einer Kontaktzeit von 24 Stunden, von 16-30 N/25 mm, wohingegen wiederablösbare Kleber eine Klebkraft zwischen 4-12 N/25 mm aufweisen. Um diese Schicht (inklusive eventuell darüberliegender, ebenfalls ausgestanzter Schichten) rückstandsfrei aus dem mehriagigen Laminat entfernen zu können, ist unter dieser Schicht - sofern vorhanden-eine weitere trennmittelhaltige Schicht vorgesehen, im Folgenden als "innere trennmittelhaltige Schicht" bezeichnet. Eine solche innere trennmittelhaltige Schicht umfasst üblicherweise eine Polysiloxanverbindung und kann nach den dem Fachmann bekannten Methoden auf eine gewünschte Haftung an der selbstklebenden Schicht angepasst werden. Die für die Ablösung der selbstklebenden Schicht von der ihr direkt benachbarten inneren trennmittelhaltigen Schicht aufzuwendende Trennkraft, gemessen gemäß FTM-3, beträgt vorzugsweise 10 cN/50 mm bis 300 cN/50 mm. Geeignete Haftkleber sind dem Fachmann bekannt und können beispielsweise Acryl- oder Vinylacetatpolymere bzw. -copolymere oder Mischungen derselben enthalten. Diese Klebstoffe können auf Wasser oder organischen Lösungsmitteln basieren. Alternativ können auch Schmelzklebestoffe verwendet werden, beispielsweise auf Basis thermoplastischer Elastomere oder unter UV-Sfrahlung abbindende Acrylate. Sofern verwendet, hat die haftklebende Schicht üblicherweise ein Flächengewicht im Bereich von 3 bis 50 g/m², vorzugsweise 10 bis 25 g/m², bezogen auf die Trockenmasse.

Auch die haftklebende Schicht kann mit den dem Fachmann bekannten konventionellen Beschichtungsverfahren aufgetragen werden, beispielsweise im Walzlackverfahren, Rollrakelstreichverfahren, Tiefdruckverfahren, mittels Vorhang- oder Düsenbeschichten für Dispersionen und lösungsmittelhaltige Systeme oder im Walzenstreichverfahren, Vorhang- oder Düsenverfahren für Schmelzklebestoffe.

Bevorzugt sind sowohl der mehrlagige Gegenstand der vorliegenden Erfindung als auch jedes seiner Substrate flexibel, d.h. sie weisen bevorzugt eine Steifigkeit im Bereich von > 0 und < 65 mN für die einzelnen Substrate und im Bereich von 5 bis 65 mN für den mehrlagigen Gegenstand auf, jeweils gemessen nach ISO 2493 -1:2010 (E) nach 24stündiger Konditionierung der Proben bei 23 °C und 50 % relativer Luftfeuchte in Querrichtung (CD) bei einer Biegelänge von 50 mm. Für hierbei erhaltene Werte unterhalb von 20 mN sollte die Steifigkeit bei einer verkürzten Biegelänge von 10 mm im Bereich von 30 bis 300 mN liegen nach ISO 2493 -1:2010 (E).

Wie bereits ausgeführt, stellt der mehrlagigen Gegenstand der vorliegenden Erfindung in einer besonders bevorzugten Ausführungsform einen Fluggepäckanhänger mit integriertem RFID-Transponder dar, der schlaufenförmig um einen Griff, einen Henkel oder ähnliches eines Gepäckstückes gewunden werden kann und an diesem durch Verkleben der beiden Enden des Anhängers über ihre Kaltsiegelklebeschichten angebracht werden kann.

Es ist daher bevorzugt, dass das erste Substrat des mehrlagigen Gegenstands der vorliegenden Erfindung zumindest teilweise in einer solchen Weise schlaufenförmig angeordnet ist, dass ein erster Bereich der Kaltsiegelklebeschicht des ersten Substrats mit einem weiteren Bereich der Kaltsiegelklebeschicht dieses ersten Substrats verbunden ist, wobei sich das zweite Substrat außerhalb, teilweise innerhalb oder vollständig innerhalb dieses verbundenen Bereiches der beiden Enden des ersten Substrats befinden kann, wobei der Gegenstand bevorzugt ein an dem zu kennzeichnenden Objekt angebrachtes Etikett (Loop Tag) darstellt, besonders bevorzugt ein schlaufenförmig an einem Gepäckstück angebrachtes Etikett in Form eines Gepäckstreifenanhängers.

Das zweite Substrat, welches beispielsweise ein Sicherheitsmerkmal und/oder eine Datenspeichervorrichtung enthalten kann, bevorzugt einen RFID-Transponder, kann folglich außerhalb, teilweise innerhalb oder vollständig innerhalb der Verklebung der beiden Enden des ersten Substrats über ihre Kaltsiegelklebeschicht eingebracht sein. Es wurde überraschenderweise gefunden, dass die Klebkraft eines Fluggepäckanhängers durch die Anbringung eines RFID-Transponders in seinem Inneren nicht in entscheidender Weise beeinträchtigt wird, obwohl die verklebte Fläche hierdurch deutlich reduziert wird. Dies ist in den nachfolgenden Beispielen näher erläutert.

Bevorzugt weist das erste Substrat eine im Wesentlichen rechteckige, längliche Form auf. Der Begriff "im Wesentlichen rechteckig" schließt im Sinne der vorliegenden Erfindung auch eine oder mehrere abgerundete oder abgeschrägte Ecken, eine gewisse Taillierung des Substrats oder ähnliches ein. Insbesondere vor der Verbindung mit dem zweiten Substrat kann das erste Substrat bevorzugt in Form einer Rolle beliebiger Länge bereitgestellt werden. Für die Endanwendung des mehrlagigen Gegenstands der vorliegenden Erfindung weist das erste Substrat jedoch bevorzugt eine Länge von 150 bis 800 mm, bevorzugter 300 bis 700 mm und besonders bevorzugt von 400 bis 600 mm auf. Die Breite des ersten Substrats beträgt bevorzugt 15 bis 80 mm, weiterhin bevorzugt 30 bis 70 mm und besonders bevorzugt 45 bis 60 mm.

Das zweite Substrat kann grundsätzlich jede beliebige Form annehmen und beispielsweise im Wesentlichen quadratisch, rechteckig, hexagonal, rund, oval oder unregelmäßig geformt sein, ohne hierauf beschränkt zu sein. Die nachfolgenden Längenangaben beziehen sich daher auf den Durchmesser des Substrats bzw. die Strecke größter Längsausdehnung. Die Länge des zweiten Substrats beträgt bevorzugt 10 bis 100 mm, weiterhin bevorzugt 15 bis 75 mm und besonders bevorzugt 20 bis 50 mm. Die Breite des zweiten Substrats beträgt bevorzugt 10 bis 75 mm, weiterhin bevorzugt 15 bis 50 mm und besonders bevorzugt 20 bis 40 mm.

Das zweite Substrat ist jedenfalls kürzer, d.h. von geringer Längenausdehnung und bevorzugt auch schmaler, d.h. von geringerer Breite, als das erste Substrat. Bevorzugt beträgt die Länge des zweiten Substrats maximal 50 Prozent der Länge des ersten Substrats, besonders bevorzugt maximal 20 Prozent der Länge des ersten Substrats und mindestens 2 Prozent der Länge des ersten Substrats. Hierdurch wird bei einer Anbringung des zweiten Substrats die für die Endanwendung als Schlaufenetikett erforderliche Verklebungsfläche des ersten Substrats gewährleistet. Sofern eine Anbringung des zweiten Substrats im Bereich des (nicht mit einem weiteren Teil des ersten Substrats verklebten) Schlaufenbereichs des Gepäckanhängers vorgesehen ist, kann das zweite Substrat auch die gleiche Breite wie das erste Substrat aufweisen. Insbesondere wenn jedoch eine Einbringung des zweiten Substrats in dem Bereich vorgesehen ist, in welchem in der Endanwendung zwei Enden des ersten Substrats miteinander verbunden werden, sollte das zweite Substrat auch schmaler als das erste Substrat sein. Bevorzugt sollte die Breite des zweiten Substrats maximal 90 Prozent und mindestens 10 Prozent, besonders bevorzugt 40-60 Prozent der Breite des ersten Substrats betragen, um eine ausreichende Klebkraft der Verklebungsflächen zwischen den beiden Enden des ersten Substrats zu gewährleisten.

Die vorliegende Erfindung betrifft auch ein Verfahren zur Herstellung des erfindungsgemäßen Gegenstandes, umfassend die folgenden Schritte:
i. Getrenntes Bereitstellen des ersten Substrats und des zweiten Substrats,
ii. Gegebenenfalls Zuschneiden und/oder Vereinzeln des ersten und/oder des zweiten Substrats,
iii. Positionieren des zweiten Substrats relativ zu dem ersten Substrat in einer Weise, dass sich die jeweiligen mit der Kaltsiegelklebeschicht versehenden Seiten beider Substrate gegenüberstehen und
iv. Ausüben eines Drucks auf die in Schritt iii erhaltene Anordnung beider Substrate, um diese über ihre Kaltsiegelklebeschichten miteinander zu verbinden.

Das getrennte Bereitstellen des ersten Substrats und des zweiten Substrats kann beispielsweise in Form von Rollen auf zwei verschiedenen Abwicklungen eines Thermodrucker erfolgen.

Beispielsweise kann eine Rolle des zweiten Substrats in Form von mit einem Kaltsiegelkleber beschichteten RFID-Tags neben den in einer ersten Abwicklung eines Thermodruckers befindlichen Anhängeretiketten mit einem Produktaufbau, entsprechend WO 00/55832 A1 oder EP 2 061 018 A1, in eine zweite Abwicklung desselben Thermodruckers eingelegt werden. Über eine entsprechende Materialführung werden die beiden Substrate zusammengeführt und zwar in der Form, dass die Kaltsiegelklebeschicht der Anhängeetiketten gegen die Kaltsiegelklebeschicht der RFID-Tags läuft und so eine Verklebung der Anhängeetiketten mit den RFID-Transpondern erfolgen kann. Über die Druckersoftware können Abwicklung eins und zwei separat angesteuert werden, so dass die Positionierung des RFID-Tags auf dem Anhängeetikett reproduzierbar festgelegt werden kann. Ein im Drucker liegendes, nach der zweiten Abwinklung angebrachtes Messer trennt das zu verklebende RFID-Tag von den restlichen RFID-Tags, und die Verklebung auf der Rückseite der Anhängeetiketten kann erfolgen. Bei Anforderung eines bedruckten Etiketts kann dann im Drucker wahlweise der Befehl gegeben werden, ein Anhängeretikett mit RFID-Tag oder ohne RFID-Tag auszudrucken. Bei der Anforderung eines Anhängeetikettes mit RFID-Tag kann das RFID-Tag während des Tag-Ausdrucks in der gerade beschriebenen Weise über die zweite Abwicklung auf die durch die Software festzulegende Position aufgeklebt werden. Das fertige, bedruckte Anhängeetikett mit aufgeklebtem RFID-Transponder kann nach Beendigung des Ausdrucks über eine Perforation, falls vorhanden, von Hand abgerissen oder über eine zweite Schneidvorrichtung abgeschnitten werden, welche wahlweise außerhalb oder innerhalb des Druckers oder unmittelbar an der Ausgabe des Druckers, d.h. dem Übergang vom Inneren des Druckers zu dem ihn umgebenden Äußeren liegen kann. Das erfindungsgemäße Verfahren kann weiterhin mindestens einen Schritt des Beschriftens und/oder Bedruckens weinigstens eines Teils der Oberfläche des ersten und zweiten Substrats umfassen, bevorzugt eines Teils derjenigen Oberfläche des ersten und/oder zweiten Substrats, welche der Kaltsiegelklebeschicht gegenüberliegt, besonders bevorzugt mittels eines Verfahrens, ausgewählt aus der Gruppe, enthaltend Thermodruck, Tintenstrahldruck, Transferdruck, Laserdruck, Offsetdruck, Flexodruck, Tiefdruck und Siebdruck, vor oder nach dem Verbinden der mindestens zwei Substrate gemäß Schritt iv. Besonders bevorzugt wird ausschließlich die Vorderseite des ersten Substrats gedruckt.

Wie bereits erwähnt, können das erstes Substrat und/oder das zweite Substrat jeweils in Form einer Bahn auf einer Rolle bereitgestellt werden, wobei die Substratbahnen unabhängig voneinander optional Perforierungen aufweisen können. Dies erfolgt bevorzugt innerhalb eines Druckers, der mindestens zwei Abwicklungen und mindestens eine Schneidvorrichtung, jedoch weder Vorrichtungen zum Ablösen eines ersten oder zweiten Substrats von einem Schutzpapier noch Aufwicklungen zur Aufnahme des Schutzpapiers umfasst, besonders bevorzugt innerhalb eines Druckers, umfassend mindestens zwei Abwicklungen und eine im Drucker befindliche (innenliegende) Schneidvorrichtung für das Abschneiden und Einspenden des RFID-Tags und eine weitere Schneidvorrichtung zum Abschneiden der fertigen, d.h. gegebenenfalls mit einem RFID-Tag versehenen, Fluggepäckanhänger für die Selbstabfertigung (Self-Check-in), wobei der Drucker bevorzugt einen Thermodrucker darstellt.

Die Erfindung betrifft weiterhin die Verwendung eines Druckers, der mindestens zwei und bevorzugt genau zwei Abwicklungen und mindestens eine innenliegende Schneidvorrichtung für das Abschneiden und Einspenden der RFID-Tags umfasst, jedoch weder Vorrichtungen zum Ablösen eines ersten oder zweiten Substrats von einem Schutzpapier noch Aufwicklungen zur Aufnahme des Schutzpapiers zur Herstellung der erfindungsgemäßen mehrlagigen Gegenstände. Hierbei stellt der erfindungsgemäße mehrlagige Gegenstand bevorzugt ein Etikett, besonders bevorzugt ein schlaufenförmig an einem Gepäckstück anzubringendes Etikett in Form eines Gepäckstreifenanhängers dar, wie bereits oben detailliert beschrieben.

Besonders bevorzugt wird der oben beschriebene Drucker hierbei zur Herstellung des erfindungsgemäßen Gegenstandes nach dem oben beschriebenen erfindungsgemäßen Verfahren verwendet. Ganz besonders bevorzugt ist die Verwendung in der Selbstabfertigung (Self-Check-in), insbesondere durch Fluggäste an einem Flughafen, wobei der Drucker bevorzugt einen Thermodrucker darstellt.

Beschreibung der Abbildungen:

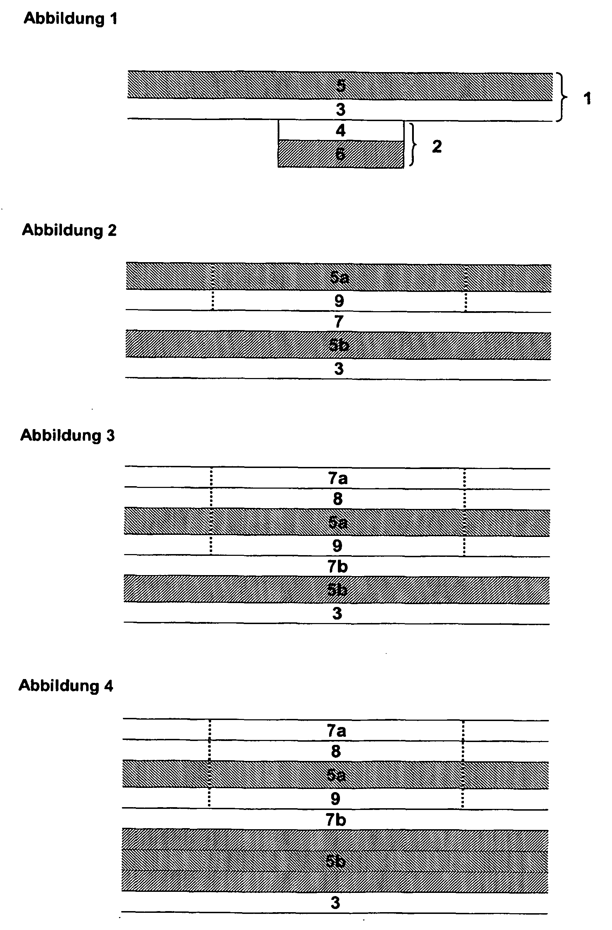

Abbildung 1 verdeutlicht den grundsätzlichen Aufbau des mehrlagigen Gegenstands der vorliegenden Erfindung, in welchem ein erstes Substrat 1, umfassend eine Trägerschicht 5, deren eine Seite hier vollständig mit einer Kaltsiegelklebeschicht 3 bedeckt ist, mit einem zweiten Substrat 2, umfassend eine zweites Trägerschicht 6, deren eine Seite hier ebenfalls vollständig mit einer Kaltsiegelklebeschicht 4 beschichtet ist, eben durch den Kontakt der beiden Kaltsiegelklebeschichten 3 und 4 verbunden ist. Es ist zu erkennen, dass das erste Substrat 1 eine größere Fläche aufweist als das zweites Substrat 2 und das zweite Substrat 2 lediglich teilweise die Kaltsiegelklebeschicht 3 des ersten Substrats 1 bedeckt. Die Substrate 1 und 2 können in ihrer einfachsten Form neben einer Kaltsiegelklebeschicht 3 bzw. 4 nur eine Trägerschicht 5 bzw. 6 enthalten oder bevorzugt mehrlagig sein, wie durch die nachfolgenden Abbildungen 2 bis 4 verdeutlicht wird.
Abbildung 2 zeigt beispielhaft einen mehrschichtigen Aufbau, der für das erste Substrat 1 und/oder das zweite Substrat 2 verwendet werden kann. Dieses Substrat umfasst zwei Trägerschichten 5a und 5b, welche in einem mehrschichtigen Laminat miteinander verbunden sind. Die Unterseite der einen Trägerschicht 5b ist mit einer Kaltsiegelklebeschicht 3 beschichtet, während auf die Oberseite dieser Trägerschicht 5b eine trennmittelhaltige Schicht 7 aufgebracht ist. Über diese ist ein zweites Substrat 5a aufgebracht, welches an seiner Unterseite mit einer selbstklebenden Schicht 9 versehen ist, welche an der Trennmittelschicht 7 haftet. Mit Hilfe von gestrichelten Linien sind Ausstanzungen dargestellt, durch die Teile der oberen Trägerschicht 5a sowie der an ihrer Unterseite aufgetragenen selbstklebenden Beschichtung 9 aus dem gesamten Verbund herausgelöst und beispielsweise als selbstklebende Kontrolletiketten verwendet werden können.
Abbildung 3 zeigt einen weiteren beispielhaften Aufbau eines Mehrschichtlaminats, welches für das erste und/oder das zweite Substrat verwendet werden kann, welches zusätzlich zu den bereits in Abbildung 2 beschriebenen Merkmalen noch eine zusätzliche bedruckbare Schicht 8 enthält, welche auf die obere Trägerschicht 5a aufgebracht ist und die ihrerseits auf der Oberfläche mit einer trennmittelhaltigen Beschichtung 7a beschichtet ist. Da die trennmittelhaltige Beschichtung 7a das Ablösen dieser Oberfläche von der Kaltsiegelklebeschicht 3 erleichtern soll, während die trennmittelhaltige Schicht 7b eine adäquate Haftung, aber auch Trennung von der selbstklebenden Schicht 9 ermöglichen soll, unterscheiden sich die Zusammensetzungen dieser beiden Schichten bevorzugt. Es ist ferner zu erkennen, dass eventuell vorhandene Ausstanzungen hier auch die obere trennmittelhaltige Schicht 7a sowie die zusätzliche bedruckbare Schicht 8 umfassen.
Abbildung 4 zeigt eine weitere Ausführungsform eines mehrschichtigen Substrats, wie grundsätzlich bereits in Abbildung 3 gezeigt, wobei die Trägerschicht 5b in diesem Beispiel einen Dreifachverbund darstellt..

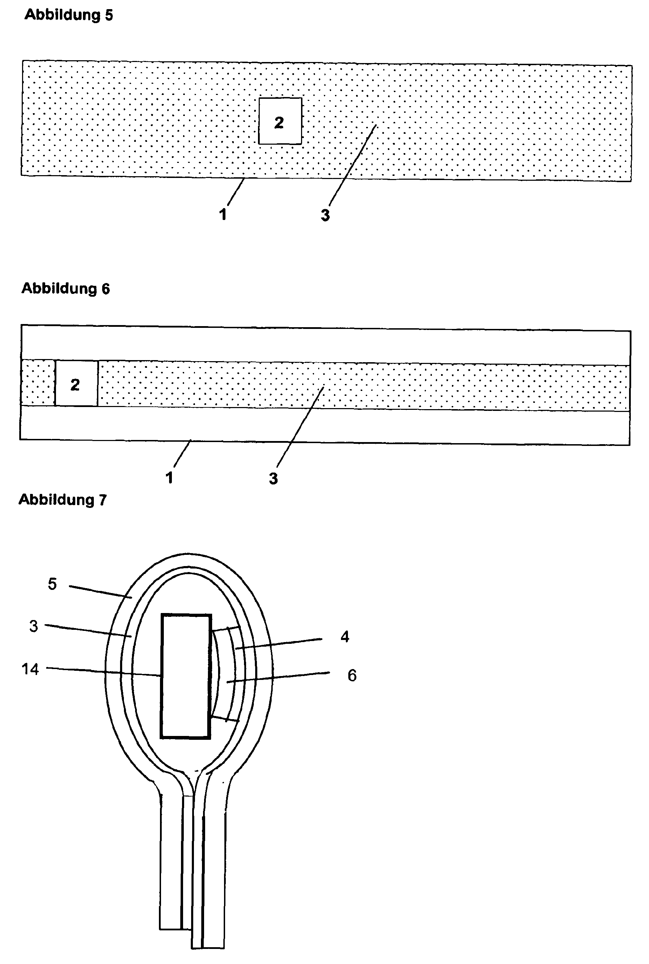

Abbildung 5 zeigt eine Aufsicht auf einen mehrlagigen Gegenstand der vorliegenden Erfindung, in weichem das zweite Substrat 2 in einen inneren Bereiche der Längsausdehnung des ersten Substrats eingebracht wurde. Die Aufsicht zeigt die Rückseite des ersten Substrats 1, die vollflächig mit einer Kaltsiegelklebeschicht 3 (dargestellt durch eine gepunktete Fläche) beschichtet ist.
Abbildung 6 zeigt eine Aufsicht auf einen mehrlagigen Gegenstands gemäß der vorliegenden Erfindung, bei welchem das zweite Substrat 2 in einem Randbereich der Längsausdehnung des ersten Substrats 1 eingebracht wurde. Diese Ansicht zeigt ebenfalls die Rückseite eines ersten Substrats 1, wobei die Kaltsiegelklebeschicht 3 (dargestellt durch die gepunktete Fläche) hier nur partiell auf die Rückseite des ersten Substrats aufgebracht wurde.
Abbildung 7 zeigt schematisch den Querschnitt durch einen mehrlagigen Gegenstand der vorliegenden Erfindung, bei welchem das zweite Substrat, hier dargestellt durch die zweite Trägerschicht 6 und die Kaltsiegelklebeschicht 4, wie bereits für Abbildung 5 beschrieben, an dem ersten Substrat, hier dargestellt durch die erste Trägerschicht 5 und die Kaltsiegelklebeschicht 3, angebracht wurde und der mehrlagige Gegenstand anschließend durch Verklebung der beiden Endbereiche der Kaltsiegelklebeschicht 3 des ersten Substrats schlaufenförmig um ein Objekt 14, beispielsweise einen Koffergriff, positioniert und fixiert wurde. Das zweite Substrat ist hierbei vollständig außerhalb des Bereiches angeordnet, in welchem ein Bereich der Kaltsiegelklebeschicht 3 des ersten Substrats mit einem weiteren Bereich dieser Kaltsiegelklebeschicht 3 verbunden ist.

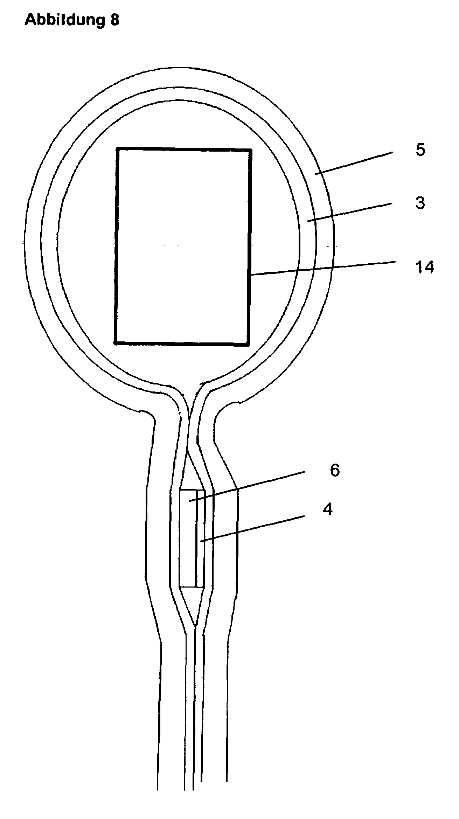

Abbildung 8 zeigt die entsprechende Anordnung, die erhalten wird, wenn ein mehrlagiger Gegenstand, wie in Abbildung 6 gezeigt, so angeordnet wird, wie dies bereits für Abbildung 7 beschrieben wurde. Hierbei ist das zweite Substrat vollständig im Bereich der durch Bereiche der Kaltsiegelklebeschicht verbundenen Bereiche des ersten Substrats angeordnet.

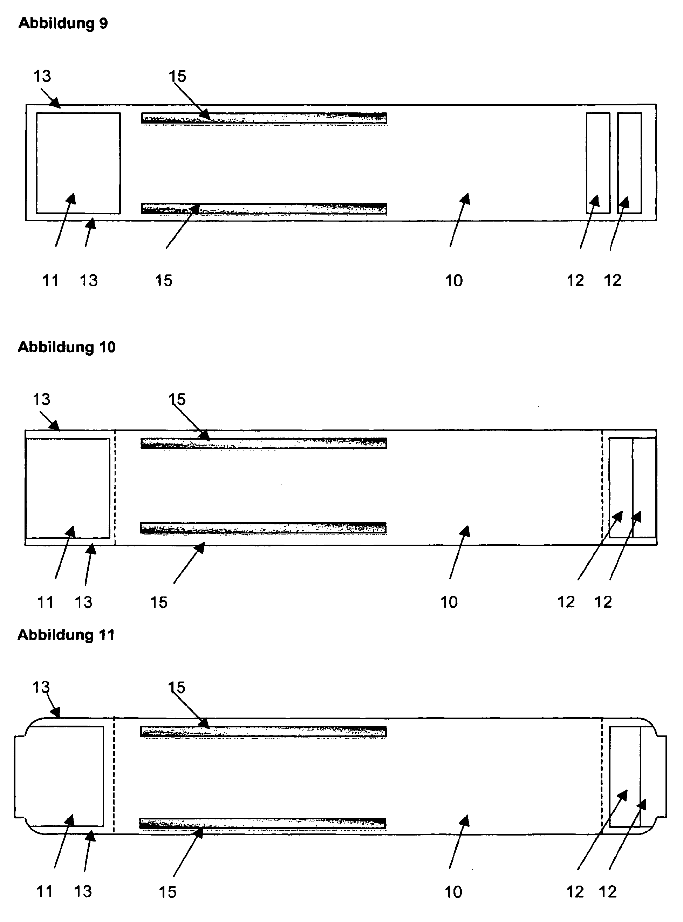

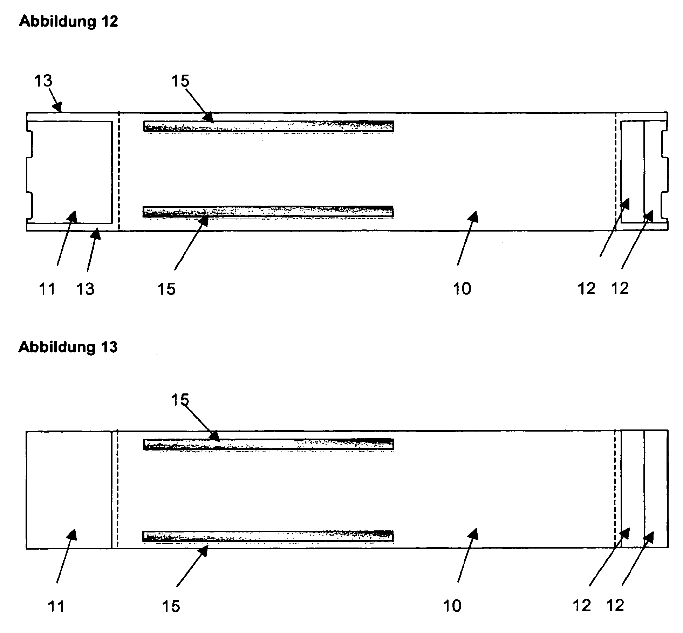

Die Abbildungen 9 bis 13 zeigen jeweils eine Aufsicht auf eine bevorzugte Ausführungsform des erfindungsgemäßen Gegenstands in Form eines fänglichen Gepäckstreifenanhängers 10, welcher Perforationen aufweisen kann (durch die gestrichelten Linien dargestellt) und Beleg- und Kontrollabschnitte aufweist (Claim Tag 11 und Additional Stubs 12) sowie optional Randbereiche 13 an der Längsseite des Streifens, um dessen Transprtierbarkeit im Drucker zu verbessern und optional farbige Markierungelinien 15, die von der IATA zur Kennzeichnung von Gepäckstückes auf internationalen Flügen vorgeschrieben sind.

### Ausführungsbeispiele

### Beispiel 1: Erfindungsgemäßer Fluggepäckanhänger mit Kaltsiegelklebebeschichtung und RFID-Tag mit Positionierung des RFID-Tags im Bereich der Schlaufenverkleloung

Für einen Transferflug mit Zwischenstopp soll beim Check-in ein Fluggepäckanhänger mit RFID-Tag ausgedruckt werden. Im Drucker befinden sich 2 Abwicklungen:lin der ersten Abwicklung befindet sich der Fluggepäckanhänger mit den Abmessungen 485 mm Länge und 52 mm Breite und dem Produktaufbau: Thermopapier/Haftkleber/Silikon-Schicht/40 µm biaxial gereckte Polypropylenfolie/Kaschierkleber/30 g/m² Papier/Kaltsiegelklebeschicht. Als Haftkleber wird ein permanent haftender Schmelzklebstoff auf Basis SIS (Styrol-Isopren-Styrol) verwendet, als Kaschierkleber eine selbstvernetzende Styrolacrylat-Dispersion. Der verwendete Kaltsiegelkleber enthält einen Naturlatex-Anteil von 60%, einen Tackifier-Anteil von 30% und einen Pigment-Anteil (Calciumcarbonat) von 5 Prozent und weiterhin 5 Prozent sonstige Additive, wie beispielsweise Netzmittel, Entschäumer, Stabilisatoren etc. Ein geeigneter Kaltsiegelkleber ist beispielsweise unter dem Handelsnamen Crodaseal 22-222 von Croda (Snaith, England) erhältlich.

In der zweiten Abwicklung befindet sich eine Rolle von RFID-Transpondern mit dem Frequenzbereich 13,56 MHz und den Abmessungen 30 x 30 oder 45 x 35 mm² pro RFID-Tag und dem Produktaufbau: Polyesterfolie vorderseitig bedruckt oder beschichtet mit einer RFID-Antenne und einem RFID-Chip, rückseitig beschichtet mit einem Kaltsiegelkleber, zusammen als RFID-Tag bezeichnet.

Beim Ausdruck des Fluggepäckanhängers mit RFID-Transponder startet zunächst der Aufdruck des in Abwicklung 1 befindlichen Fluggepäckanhängers mit visuell wahrnehmbaren Informationen wie Barcode, Start- und Zielflughafen etc. Gegen Ende des Drucks wird das in Abwicklung 2 befindliche RFID-Tag zukaschiert. Das RFID-Tag wird über ein Rotationsmesser von den restlichen in Abwicklung 2 befindlichen RFID-Tags abgeschnitten und mit der kaltsiegelklebebeschichteten Seite zur ebenfalls kaltsiegelklebebeschichteten Seite des Fluggepäckanhängers so im Drucker zukaschiert, dass die Außenkante des RFID-Tags 30 mm vor dem Ende der Längsseite des Anhängers positioniert ist. Parallel zum Druck wird der RFID-Transponder mit den gewünschten Informationen über die im Drucker installierte Lese- und Sehreibeinrichtung programmiert. Der fertige Fluggepäckanhänger mit RFID-Transponder wird über ein zweites, im Drucker positioniertes Rotationsmesser abgeschnitten oder kann mittels einer Perforation zwischen den einzelnen Anhängern vom Passagier abgerissen werden.

Der bedruckte, vereinzelte Fluggepäckanhänger mit RFID-Transponder wird dann wie ein üblicher Fluggepäckanhänger um den Koffergriff als Schlaufenanhänger positioniert und über die entsprechenden Abschnitte der Kaltsiegelklebeschicht verklebt.

Es wurden die folgenden Klebkräfte gemessen in Anlehnung an FTM-1, wie bereits oben beschrieben: Die Klebkraft eines erfindungsgemäßen Anhängers mit einer über Kaltsiegelklebstoff verklebten Fläche von 16 cm x 5,2 cm, wobei sich im Inneren dieser Fläche ein RFID-Tag mit 45 mm Länge und 35 mm Breite befindet, das nur einseitig mit einem Kaltsiegelklebstoff beschichtet ist, betrug im Durchschnitt etwa 11,3 N/ 52 mm.

Die Klebkraft eines Anhängers ohne ein in die verklebte Fläche integriertes RFID-Tag gleicher Größe und verklebter Fläche betrug rund 15 N/52 mm.

Es zeigt sich folglich, dass mit Hilfe des erfindungsgemäßen Aufbaus mit Kaltsiegelklebeschichten eine hinreichend große Klebkraft des Anhängers selbst dann erreicht werden kann, wenn im Inneren der verklebten Fläche ein RFID-Tag integriert ist, welches nur einseitig mit Kaltsiegelklebstoff beschichtet ist und somit in diesem Bereich keine Haftung zwischen den beiden verklebten Enden des Anhängers vermittelt.

### Beispiel 2: Standard-Fluggepäckanhänger mit Haftkleberbeschichtung und Silikonpapierabdeckung (Vergleichsbeispiel)

Für den gleichen Transferflug soll beim Check-in ein konventioneller Fluggepäckanhänger mit Haftkleber und Silikonpapierabdeckung mit RFID-Tag ausgedruckt werden.

Ein Einsatz eines RFID-Tags mit Kaltsiegelklebebeschichtung ist nicht möglich, da dieses Material auf der Sililconpapierrückseite des Fluggepäckanhängers nicht haftet.

Ein RFID-Tag mit Haftkleberbeschichtung kann zwar rückseitig aufgeklebt werden, um dies aber "inline" während des Thermo-Druckprozesses durchführen zu können, werden mindestens drei Wickeleinrichiungen benötigt: Abwicklung 1 für das Fluggepäckanhänger-Material; Abwicklung 2 für die RFID-Tags und mindestens eine dritte Wickeleinrichtung zur Aufwicklung des Silikonpapiors des RFID-Tags. Drucker mit mindestens drei Wicklungen sind nicht ohne weiteres handelsüblich. Außerdem ist ein Drucker mit mindestens drei Abwicklungen in der Anwendung wartungsaufwändiger, störanfälliger und auch teurer.

### Beispiel 3: Erfindungsgemäßer Fluggepäckanhänger mit Kaltsiegelklebebeschichtung und RFID-Tag mit Positionierung des RFID-Tags im Bereich der Schlaufe

Wieder soll an einem Flughafen für einen Transferflug beim Check-in ein Fluggepäckanhänger mit RFID-Tag ausgedruckt werden. In der ersten der zwei Abwicklungen des Druckers befindet sich der Fluggepäckanhänger mit dem Abmessungen 455 mm Länge und 52 mm Breite und dem Produktaufbau: Thermopapier/Haftkleber/Silikonschicht/30 µm biaxial gereckte PLA-Folie/Kaltsiegel-Klebeschicht.

In der zweiten Abwicklung befinden sich analog zu Beispiel 1 die RFID-Transponder mit den Abmessungen 30 x 30 oder 45 x 35 mm² und dem Produktaufbau: Polyesterfolie vorderseitig bedruckt/beschichtet mit einer RFID-Antenne und einem RFID-Chip, rückseitig beschichtet mit einem Kaltsiegelkleber.

Beim Ausdruck des Fluggepäckanhängers mit RFID-Transponder startet zunächst der Aufdruck auf das in Abwicklung 1 befindliche Substrat (Fluggepäckanhänger). Nach 200 mm wird das in Abwicklung 2 befindliche RFID-Tag zukaschiert. Das RFID-Tag wird über ein Rotationsmesser von den restlichen in Abwicklung 2 befindlichen RFID-Tags abgeschnitten und mit der kaltsiegelklebebeschichteten Seite zur ebenfalls kaltsiegelklebebeschichteten Seite des Fluggepäckanhängers zukaschiert. Der 485 mm lange fertige Fluggepäckanhänger mit RFID-Transponder kann vom Passagier über eine Perforation selbsttätig abgerissen werden. Beim Verkleben des Fluggepäckanhänger um den Koffergriff kann eine verklebte Fläche von 160 - 200 x 52 mm² erzeugt werden, ohne dass der RFID-Transponder in die zu verklebende Fläche integriert wird.

### Bezugszeichenliste:

- 1: Erstes Substrat
- 2: Zweites Substrat
- 3: Kaltsiegelklebeschicht des ersten Substrats
- 4: Kaltsiegelklebeschicht des zweiten Substrats
- 5: Trägerschicht des ersten Substrats (Erste Trägerschicht)
- 6: Trägerschicht des zweiten Substrats (Zweite Trägerschicht)
- 7: Trennmittelhaltige Schicht
- 8: Zusätzliche bedruckbare Schicht
- 9: Selbstklebend Schicht
- 10: Länglicher, im Wesentlichen rechteckiger Streifen als erstes Substrat
- 11: Gepäckbelegabschritt für den Passagier (Claim Tag)
- 12: Kontrollabschnitte für die Fluggesellschaft (Additional Stubs)
- 13: Nicht geschnittene oder gestanzte Randbereiche zur Verbesserung der Transportierbarkeit des Substrats in den Drucker
- 14: Zu kennzeichnendes Objekt bzw. Teil desselben, beispielsweise Koffergriff
- 15: Farbige Markierungslinien

## Patentansprüche

1. Mehrlagiger Gegenstand, umfassend ein erstes Substrat (1) mit einer ersten Trägerschicht (5) und mindestens ein weiteres, zweites, Substrat (2) mit einer zweiten Trägerschicht (6), welche auf jeweils einer Seite zumindest teilweise mit einer Kaltsiegelklebeschicht (3, 4) versehen sind und eben durch den Kontakt ihrer jeweiligen Kaltsiegelklebeschicht (3, 4) miteinander verbunden sind, **dadurch gekennzeichnet, dass** das erste Substrat (1) eine größere Fläche aufweist als das mindestens eine weitere Substrat (2) und das mindestens eine weitere Substrat (2) lediglich teilweise die Kaltsiegelklebeschicht (3) des ersten Substrats (1) bedenkt, wobei die Klebkraft zwischen den beiden Kaltsiegelklebeschichten (3, 4) 3 N/25 mm bis 30 N/25 mm beträgt.

2. Gegenstand gemäß Anspruch 1, wobei das zweite Substrat (2) mindestens einen Chip zur Speicherung von Daten und eine Antenne, bevorzugt eine RFID-Vorrichtung umfasst.

3. Gegenstand gemäß einem der vorhergehenden Ansprüche, wobei die erste (5) und/oder die zweite Trägerschicht (6) ein Material umfasst, ausgewählt aus der Gruppe, enthaltend Papier, Karton, Polymerfolien, letztere bevorzugt ausgewählt aus der Gruppe, enthaltend Celluloseacetat (CA), Polyamid (PA), Polycarbonat (PC), Polyethylen (PE), Polyethylennaphthalat (PEN), Polyethylenterephthalat (PET), Polyimid (PI), Polymilchsäute (PLA), Polypropylen (PP), Polystyrol (PS) und Polyvinylchlorid (PVC), metallisierte Folien, Metallfolien und Vliese oder mehrlagige Laminate umfassend dieselben, wobei die einzelnen Lagen dieser Laminate jeweils aus den gleichen oder verschiedenen Materialien bestehen können und optional mit natürlichen oder künstlichen Faserstoffen verstärkt sein können.

4. Gegenstand gemäß einem der vorhergehenden Ansprüche, wobei die Kaltsiegelklebeschichten (3, 4) unabhängig voneinander jeweils mindestens einen Kaltsiegelklebstoff umfassen, ausgewählt aus der Gruppe, enthaltend natürlich vorkommenden oder synthetischen Latex, natürlich vorkommenden oder synthetischen Kautschuk, (Meth-) Acrylatcopolymere und Mischungen derselben.

5. Gegenstand gemäß einem der vorhergehenden Ansprüche, wobei mindestens eine Seite des einen oder beider Substrate zumindest teilweise eine beschreib- und/oder bedruckbare Oberfläche (8) umfasst, bevorzugt eine Oberfläche bedruckbar mittels eines Verfahrens, ausgewählt aus der Gruppe, enthaltend Thermodruck, Tintenstrahldruck, Transferdruck, Laserdruck, Offsetdruck, Flexodruck, Tiefdruck und Siebdruck.

6. Gegenstand gemäß einem der vorhergehenden Ansprüche, wobei mindestens eines der Substrate (1, 2), bevorzugt das erste Substrat (1), ein mehrlagiges Laminat umfasst, welches mindestens eine trennmittelhaltige Schicht (7), Release-Schicht, umfasst sowie bevorzugt zusätzlich mindestens eine selbstklebenden Schicht (9).

7. Gegenstand gemäß einem der vorhergehenden Ansprüche, wobei der Gegenstand ein Etikett, bevorzugt ein schlaufenförmig an dem zu kennzeichnenden Objekt (14) anzubringendes Etikett, Loop Tag, darstellt, besonders bevorzugt ein schlaufenförmig an einem Gepäckstück anzubringendes Etikett in Form eines Gepäckstreifenanhängers (10) für die Selbstabfertigung (Self-Check-in.

8. Gegenstand gemäß einem der vorhergehenden Ansprüche, wobei das erste Substrat zumindest teilweise in einer solchen Weise schlaufenförmig angeordnet ist, dass ein erster Bereich der Kaltsiegelklebeschicht (3) des ersten Substrats (1) mit einem weiteren Bereich der Kaltsiegelklebeschicht (3) dieses ersten Substrats verbunden ist, wobei sich das zweite Substrat (2) außerhalb, teilweise innerhalb oder vollständig innerhalb dieses verbundenen Bereiches befinden kann, wobei der Gegenstand bevorzugt ein an dem zu kennzeichnenden Objekt (14) angebrachtes Etikett, Loop Tag, darstellt, besonders bevorzugt ein schlaufenförmig an einem Gepäckstück angebrachtes Etikett in Form eines Gepäckstreifenanhängers (10).

9. Gegenstand gemäß einem der vorhergehenden Ansprüche, wobei das erste Substrat (1) eine Länge von 150 bis 800 mm, bevorzugt 300 bis 700 mm, besonders bevorzugt 400 bis 600 mm und/oder eine Breite von 15 bis 80 mm, bevorzugt 30 bis 70 mm, besonders bevorzugt. 45 bis 60 mm aufweist und/oder das zweite Substrat (2) eine Länge von 10 bis 100 mm, bevorzugt 15 bis 75 mm, besonders bevorzugt 20 bis 50 mm und/oder eine Breite von 10 bis 75 mm, bevorzugt 15 bis 50 mm, besonders bevorzugt 20 bis 40 mm aufweist, wobei das zweite Substrat (2) jedenfalls kürzer und bevorzugt auch schmaler als das erste Substrat (1) ist.

10. Verfahren zur Herstellung eines Gegenstands gemäß einem der vorhergehenden Ansprüche, umfassend die folgenden Schritte:
i. Getrenntes Bereitstellen des ersten Substrats (1) und des zweiten Substrats (2),
ii. Gegebenenfalls Zuschneiden und/oder Vereinzeln des ersten und/oder des zweiten Substrats (1, 2),
iii. Positionieren des zweiten Substrats (2) relativ zu dem ersten Substrat (1) in einer Weise, dass sich die jeweiligen mit der Kaltsiegelklebeschicht versehenden Seiten beider Substrate gegenüberstehen und
iv. Ausüben eines Drucks auf die in Schritt iii erhaltene Anordnung beider Substrate, um diese über ihre Kaltsiegelklebeschichten (3, 4) miteinander zu verbinden.

11. Verfahren gemäß Anspruch 10, weiterhin umfassend mindestens einen Schritt des Beschriftens und/oder Bedruckens wenigstens eines Teils einer Oberfläche des ersten und/oder zweiten Substrats, bevorzugt eines Teils derjenigen Oberfläche des ersten und/oder zweiten Substrats, welche der Kaltsiegelklebeschicht (3, 4) gegenüberliegt, besonders bevorzugt mittels eines Verfahrens, ausgewählt aus der Gruppe, enthaltend Thermodruck, Tintenstrahldruck, Transferdruck, Laserdruck, Offsetdruck, Flexodruck, Tiefdruck und Siebdruck, vor oder nach dem Verbinden der mindestens zwei Substrate gemäß Schritt iv.

12. Verfahren gemäß Anspruch 10 oder 11, wobei das erste Substrat und/oder das zweite Substrat (1, 2) jeweils in Form einer Bahn auf einer Rolle bereitgestellt wird, wobei die Substratbahnen unabhängig voneinander optional Perforierungen aufweisen können, bevorzugt innerhalb eines Druckers, der mindestens zwei Abwicklungen und Mindestens eine Schneidvorrichtung, jedoch weder Vorrichtungen zum Ablösen eines ersten oder zweiten Substrats von einem Schutzpapier noch Aufwicklungen zur Aufnahme des Schutzpapiers umfasst, besonders bevorzugt innerhalb eines solchen Druckers für die Selbstabfertigung, Self-Check-in, wobei der Drucker bevorzugt einen Thermodrucker darstellt.

13. Verwendung eines Druckers zur Herstellung mehrlagiger Gegenstände gemäß einem der vorhergehenden Ansprüche, wobei der Drucker mindestens zwei Abwicklungen und mindestens eine innenliegende Schneidvorrichtung umfasst, jedoch weder Vorrichtungen zum Ablösen eines ersten oder zweiten Substrats von einem Schutzpapier noch Aufwicklungen zur Aufnahme des Schutzpapiers.

14. Verwendung gemäß Anspruch 13 zur Herstellung mehrlagiger Gegenstände gemäß einem der Ansprüche 1 - 9, wobei der mehrlagige Gegenstand bevorzugt ein Etikett, besonders bevorzugt ein schlaufenförmig an einem Gepäckstück anzubringendes Etikett in Form eines Gepäckstreifenanhängers (10) umfasst.

15. Verwendung gemäß Anspruch 13 oder 14 in einem Verfahren gemäß einem der Ansprüche 10 bis 12, bevorzugt in der Selbstabfertigung, Self-Check-in, wobei der Drucker bevorzugt einen Thermodrucker darstellt.

## Claims

1. Multilayer article comprising a first substrate (1) having a first backing layer (5) and at least one further, second, substrate (2) having a second backing layer (6), each of which are provided on one side at least partially with a cold-seal adhesive layer (3, 4) and are bonded to one another specifically via the contact between their respective cold-seal adhesive layers (3, 4), **characterized in that** the area of the first substrate (1) is greater than that of the at least one further substrate (2) and the at least one further substrate (2) only partially covers the cold-seal adhesive layer (3) of the first substrate (1), wherein the adhesion between the two cold-seal adhesive layers (3, 4) is from 3 N/25 mm to 30 N/25 mm.

2. The article according to Claim 1, wherein the second substrate (2) comprises at least one chip for the storage of data and one antenna, preferably an RFID device.

3. The article according to any one of the preceding claims, wherein the first (5) and/or the second backing layer (6) comprises a material selected from the group comprising paper, paper board, polymer foils, wherein the latter are preferably selected from the group comprising cellulose acetate (CA), polyamide (PA), polycarbonate (PC), polyethylene (PE), polyethylene naphthalate (PEN), polyethylene terephthalate (PET), polyimide (PI), polylactic acid (PLA), polypropylene (PP), polystyrene (PS), and polyvinyl chloride (PVC), metallized foils, metal foils, and nonwovens, or multilayer laminates comprising these, wherein the individual layers of these laminates can respectively be composed of the same or different materials and can optionally be reinforced by natural or synthetic fiber materials.

4. The article according to any one of the preceding claims, wherein the cold-seal adhesive layers (3, 4) each independently comprise at least one cold-seal adhesive selected from the group consisting of naturally occurring or synthetic latex, naturally occurring or synthetic rubber, (meth)acrylate copolymers, and mixtures thereof.

5. The article according to any one of the preceding claims, wherein at least one side of one of the substrates, or of both substrates, comprises at least partially a writable and/or printable surface (8), preferably a surface that is printable by means of a process selected from the group comprising thermal printing, ink-jet printing, transfer printing, laser printing, offset printing, flexographic printing, intaglio printing, and screen printing.

6. The article according to any one of the preceding claims, wherein at least one of the substrates (1, 2), preferably the first substrate (1), comprises a multilayer laminate which comprises at least one release agent-containing layer (7), release layer, and preferably further at least one self-adhesive layer (9).

7. The article according to any one of the preceding claims, wherein the article is a label, preferably a label, loop tag, to be attached in the manner of a loop on the object (14) to be marked, particularly preferably a label in the form of a baggage-tag strip (10) to be attached in the manner of a loop on an item of baggage for self-check-in.

8. The article according to any one of the preceding claims, wherein the first substrate is arranged at least partially in the manner of a loop in a manner such that a first region of the cold-seal adhesive layer (3) of the first substrate (1) is bonded to a further region of the cold-seal adhesive layer (3) of said first substrate, wherein the second substrate (2) may be arranged outside of, partially within, or completely within said adhesive-bonded region, wherein the article is preferably a label, loop tag, attached on the object (14) to be marked, and is particularly preferably a label attached in the manner of a loop in the form of a baggage-tag strip (10) on an item of baggage.

9. The article according to any one of the preceding claims, wherein the first substrate (1) has a length of from 150 to 800 mm, preferably of from 300 to 700 mm, particularly preferably of from 400 to 600 mm, and/or a width of from 15 to 80 mm, preferably of from 30 to 70 mm, particularly preferably of from 45 to 60 mm, and/or the second substrate (2) has a length of from 10 to 100 mm, preferably of from 15 to 75 mm, particularly preferably of from 20 to 50 mm, and/or a width of from 10 to 75 mm, preferably of from 15 to 50 mm, particularly preferably of from 20 to 40 mm, wherein the second substrate (2) is always shorter and preferably also narrower than the first substrate (1).

10. Process for the production of an article according to any one of the preceding claims, comprising the following steps:
i. separate provision of the first substrate (1) and of the second substrate (2),
ii. optional cutting-to-size and/or segmenting of the first and/or of the second substrate (1, 2),
iii. positioning of the second substrate (2) relative to the first substrate (1) in a manner such that the respective sides that are provided with the cold-seal adhesive layer on the two substrates face each other, and
iv. exertion of a pressure on the arrangement of the two substrates obtained in step iii, in order to bond these to one another by way of their cold-seal adhesive layers (3, 4).

11. The process according to Claim 10, further comprising at least one step of writing and/or printing onto at least a part of a surface of the first and/or second substrate, preferably a part of that surface of the first and/or second substrate that is opposite to the cold-seal adhesive layer (3, 4), particularly preferably by means of a process selected from the group consisting of thermal printing, ink-jet printing, transfer printing, laser printing, offset printing, flexographic printing, intaglio printing, and screen printing, prior to or after the bonding of the at least two substrates according to step iv.

12. The process according to Claim 10 or 11, wherein the first substrate and/or the second substrate (1, 2) respectively is provided in the form of a web on a roll, wherein the substrate webs can each independently optionally have perforations, preferably within a printer which comprises at least two unwind systems and at least one cutting device, but comprises neither devices for separating a first or second substrate from a protective paper nor winder systems to receive the protective paper, particularly preferably within such a printer for self-check-in, wherein the printer is preferably a thermal printer.

13. Use of a printer for the production of multilayer articles according to any one of the preceding claims, wherein the printer comprises at least two unwind systems and at least one interior cutting device, but comprises neither devices for separating a first or second substrate from a protective paper nor winder systems to receive the protective paper.

14. The use according to Claim 13 for the production of multilayer articles according to any one of Claims 1-9, wherein the multilayer article is preferably a label, particularly preferably a label in the form of a baggage-tag strip (10) to be attached in the manner of a loop on an item of baggage.

15. The use according to Claim 13 or 14 in a process according to any one of Claims 10 to 12, preferably in self-check-in, wherein the printer is preferably a thermal printer.

## Revendications

1. Article multicouche comprenant un premier substrat (1) ayant une première couche de support (5), et au moins un autre, c'est-à-dire un deuxième, substrat (2) ayant une deuxième couche de support (6), qui sont munis chacun sur une face, au moins sur une partie, d'une couche (3, 4) de colle prenant à froid et qui sont attachés à plat l'un à l'autre par contact de leurs couches respectives (3, 4) de colle prenant à froid, **caractérisé en ce que** le premier substrat (1) présente une plus grande surface que l'autre substrat (2) au nombre d'au moins un et **en ce que** cet autre substrat (2) au nombre d'au moins un ne recouvre que partiellement la couche (3) de colle prenant à froid du premier substrat (1), la force de collage entre les deux couches (3, 4) de colle prenant à froid valant de 3 N/25 mm à 30 N/25 mm.

2. Article conforme à la revendication 1, dans lequel le deuxième substrat (2) comprend au moins une puce de stockage de données et une antenne, de préférence un dispositif RFID.

3. Article conforme à l'une des revendications précédentes, dans lequel la première couche de support (5) et/ou la deuxième (6) comporte(nt) un matériau choisi dans l'ensemble comprenant : papier, carton, feuilles en polymère, ces dernières étant de préférence choisies parmi celles en acétate de cellulose (CA), polyamide (PA), polycarbonate (PC), polyéthylène (PE), poly(naphtalate d'éthylène) (PEN), poly-(téréphtalate d'éthylène) (PET), polyimide (PI), poly(acide lactique) (PLA), polypropylène (PP), polystyrène (PS) ou poly(chlorure de vinyle) (PVC), feuilles métallisées, feuils métalliques et non-tissés, ou des stratifiés multicouches comportant de ces matériaux, étant entendu que les couches individuelles de ces stratifiés peuvent, dans chaque cas, être en un même matériau ou en des matériaux différents et peuvent, en option, être renforcées par des matières fibreuses naturelles ou artificielles.

4. Article conforme à l'une des revendications précédentes, dans lequel les couches (3, 4) de colle prenant à froid comprennent chacune, indépendamment l'une de l'autre, au moins une colle prenant à froid, choisie dans l'ensemble comprenant les latex naturels ou synthétiques, les caoutchoucs naturels ou synthétiques, les copolymères d'acrylate ou de méthacrylate, et leurs mélanges.

5. Article conforme à l'une des revendications précédentes, dans lequel au moins une face de l'un des substrats ou des deux constitue, au moins partiellement, une surface inscriptible et/ou imprimable (8), et de préférence une surface imprimable par un procédé choisi dans l'ensemble comprenant : impression thermique, impression par jets d'encre, impression par transfert, impression par laser, impression offset, flexographie, impression en creux, et sérigraphie.

6. Article conforme à l'une des revendications précédentes, dans lequel au moins l'un des substrats (1, 2), de préférence le premier substrat (1), comprend un stratifié multicouche qui comporte au moins une couche (7) contenant un agent de séparation, c'est-à-dire une couche détachable, et en outre, de préférence, au moins une couche autocollante (9).

7. Article conforme à l'une des revendications précédentes, lequel article représente une étiquette, de préférence une étiquette de forme tubulaire à attacher à un objet (14) à reconnaître, c'est-à-dire une étiquette-boucle (« Loop Tag »), et en particulier, une étiquette de forme tubulaire à attacher à un bagage et qui se présente sous forme d'une bande-étiquette à bagage (10) pour auto-enregistrement (« self check-in »).

8. Article conforme à l'une des revendications précédentes, dans lequel le premier substrat est, au moins partiellement, arrangé en forme de tube de telle manière qu'une première zone de la couche (3) de colle prenant à froid du premier substrat (1) est attachée à une autre zone de la couche (3) de colle prenant à froid de ce premier substrat (1), le deuxième substrat pouvant se trouver au dehors, partiellement au-dedans ou totalement au-dedans de cette zone d'attache, et l'article représentant de préférence une étiquette (« Loop Tag ») attachée à un objet (14) à reconnaître, et en particulier, une étiquette de forme tubulaire attachée à un bagage et qui se présente sous forme d'une bande-étiquette à bagage (10).

9. Article conforme à l'une des revendications précédentes, dans lequel le premier substrat (1) est long de 150 à 800 mm, de préférence de 300 à 700 mm et en particulier de 400 à 600 mm et/ou large de 15 à 80 mm, de préférence de 30 à 70 mm et en particulier de 45 à 60 mm, et/ou le deuxième substrat (2) est long de 10 à 100 mm, de préférence de 15 à 75 mm et en particulier de 20 à 50 mm et/ou large de 10 à 75 mm, de préférence de 15 à 50 mm et en particulier de 20 à 40 mm, le deuxième substrat (2) étant dans chaque cas plus court, et de préférence également plus étroit, que le premier substrat (1).

10. Procédé de fabrication d'un article conforme à l'une des revendications précédentes, comportant les étapes suivantes :
i) préparer séparément le premier substrat (1) et le deuxième substrat (2),
ii) en option, découper et/ou isoler le premier et/ou le deuxième substrat(s) (1, 2),
iii) positionner le deuxième substrat (2) par rapport au premier substrat (1) de telle sorte que les faces respectives des deux substrats qui sont munies d'une couche de colle prenant à froid soient disposées l'une en face de l'autre,
iv) et exercer une pression sur l'arrangement des deux substrats obtenu dans l'étape (iii), pour attacher ceux-ci l'un à l'autre par l'intermédiaire de leurs couches (3, 4) de colle prenant à froid.

11. Procédé conforme à la revendication 10, comprenant en outre au moins une étape d'écriture et/ou d'impression sur au moins une partie d'une surface du premier et/ou du deuxième substrat(s), de préférence sur une partie de la surface du premier et/ou du deuxième substrat(s) qui se trouve en face de la couche de colle (3, 4) prenant à froid, et en particulier, au moyen d'un procédé choisi dans l'ensemble comprenant : impression thermique, impression par jets d'encre, impression par transfert, impression par laser, impression offset, flexographie, impression en creux, et sérigraphie, avant d'attacher ou après avoir attaché, dans l'étape (iv), les substrats qui sont au nombre d'au moins deux.

12. Procédé conforme à la revendication 10 ou 11, dans lequel le premier substrat et/ou le deuxième substrat (1, 2) est ou sont préparé(s) chacun sous forme d'une feuille continue sur un rouleau, ces feuilles continues de substrat pouvant, indépendamment l'une de l'autre et en option, présenter des perforations, et de préférence, placé(s) à l'intérieur d'une imprimante qui comporte au moins deux dérouleurs et au moins un dispositif de coupe, mais ne comporte pas de dispositifs servant à détacher un substrat, le premier ou un deuxième, d'un papier protecteur, ni d'enrouleurs servant à recevoir le papier protecteur, et surtout, à l'intérieur d'une imprimante de ce type pour auto-enregistrement (« self check-in »), l'imprimante étant de préférence une imprimante thermique.

13. Utilisation, pour la fabrication d'un article multicouche conforme à l'une des revendications précédentes, laquelle imprimante comporte au moins deux dérouleurs et au moins un dispositif intérieur de coupe, mais ne comporte pas de dispositifs servant à détacher un substrat, le premier ou un deuxième, d'un papier protecteur, ni d'enrouleurs servant à recevoir le papier protecteur.

14. Utilisation, conforme à la revendication 13, pour la fabrication d'un article multicouche conforme à l'une des revendications 1 à 9, lequel article multicouche comprend de préférence une étiquette, et en particulier, une étiquette de forme tubulaire à attacher à un bagage et qui se présente sous forme d'une bande-étiquette à bagage (10).

15. Utilisation conforme à la revendication 13 ou 14, dans un procédé conforme à l'une des revendications 10 à 12, de préférence dans l'auto-enregistrement (« self check-in »), l'imprimante étant de préférence une imprimante thermique.
